# EUROPÄISCHE PATENTSCHRIFT

(11) **EP 2 238 338 B1**
(45) Veröffentlichungstag und Bekanntmachung des Hinweises auf die Patenterteilung: **13.04.2011**
(21) Anmeldenummer: 08865422.3
(22) Anmeldetag: 24.11.2008
(51) Int. Cl.: F02M 63/00, F02M 63/02, G05D 16/20, F16K 31/06

(54) **Kraftstoffsystem einer Brennkraftmaschine**
Fuel injection system for an internal combustion engine
Système d'injection de combustible d'un moteur à combustion interne

(30) Priorität: 21.12.2007 DE 102007062176
(43) Veröffentlichungstag der Anmeldung: 13.10.2010
(73) Patentinhaber: Robert Bosch GmbH, 70442 Stuttgart (DE)
(72) Erfinder: ROTH, Brigitte, 71332 Waiblingen (DE)
(86) Internationale Anmeldenummer: PCT/EP2008/066054
(87) Internationale Veröffentlichungsnummer: WO 2009/080426

(56) Entgegenhaltungen:
- EP-A- 1 219 828
- EP-A- 1 557 597
- DE-B3- 10 319 285
- JP-A- 2005 344 636
- US-A- 6 065 684
- US-A1- 2005 022 791

## Beschreibung

Die Erfindung betrifft ein Kraftstoffsystem einer Brennkraftmaschine, insbesondere eines Common-Rail-Einspritzsystems nach dem Oberbegriff des Anspruchs 1.

### Stand der Technik

Aus der DE 10 2005 052 636 A1 ist ein Kraftstoffsystem bekannt, welches eine Förderpumpe umfasst, die Kraftstoff aus einem Kraftstoffbehälter fördert. Von der Förderpumpe gelangt der Kraftstoff über eine als Zumesseinheit bezeichnete Einstelleinrichtung zu einer Hochdruck-Kraftstoffpumpe, die den Kraftstoff verdichtet und einen Hochdruck-Kraftstoffspeicher ("Rail") speist. An den Hochdruck-Kraftstoffspeicher sind mehrere Kraftstoffinjektoren angeschlossen. Der Druck im Hochdruck-Kraftstoffspeicher wird unter anderem mittels eines Druckregelventils (Absteuerventil) eingestellt. Der aus dem Hochdruck-Kraftstoffspeicher abgesteuerte Kraftstoff wird im Allgemeinen zu einem Kraftstoffbehälter zurückgeführt.

Die Grundfunktion von Druckregelventilen besteht darin, die Druckregelung in dem Hochdruck-Kraftstoffspeicher bzw. die Rail-Druckregelung in verschiedenen Regelmodi zu ermöglichen sowie eine Druckbegrenzung als Sicherheitsfunktion zu gewährleisten, um eine Gefährdung von Mensch und Umgebung auszuschließen. Dabei soll auch in den Fällen, in denen ein Steuergerätefehler oder ein Spannungsversorgungsfehler vorliegt, die Sicherheitsfunktion in Form einer Druckbegrenzung im Hochdruck-Kraftstoffspeicher gewährleistet sein.

Aus dem allgemeinen Stand der Technik sind zur Absteuerung von Kraftstoff aus dem Hochdruck-Kraftstoffspeicher und somit zur Einstellung des Drucks in dem Hochdruck-Kraftstoffspeicher zwei unterschiedliche Typen von Druckregelventilen bekannt. Diese Druckregelventile unterscheiden sich dadurch, dass sie entweder stromlos offen oder geschlossen sind.

Stromlos offene Druckregelventile werden in der Regel bei Personenkraftwagen und stromlos geschlossene Druckregelventile bei Nutzfahrzeugen eingesetzt.

Die stromlos offenen Druckregelventile, z.B. EP 1557597 A1, sind derart ausgestaltet, dass diese durch die Ansteuerung einer Magnetspule betätigt werden, so dass durch Absteuerung von Kraftstoff aus dem Hochdruck-Kraftstoffspeicher der Druck im Hochdruck-Kraftstoffspeicher auf einen gewünschten Wert eingestellt wird. Bei einem Fehler im Steuergerät oder bei der Spannungsversorgung ist das Druckregelventil geöffnet, so dass aus dem Hochdruck-Kraftstoffspeicher Kraftstoff abgesteuert wird. Somit ist auch in Fehlerfällen die Sicherheitsfunktion der Druckbegrenzung im Hochdruck-Kraftstoffspeicher durch das Druckregelventil gewährleistet. Der Nachteil dieser Konstruktion besteht jedoch darin, dass bei einem Spannungsverlust, z. B. bei Kabelbruch durch Marderschaden, kein Raildruck mehr aufgebaut werden kann und die Brennkraftmaschine bzw. der Motor nicht mehr arbeitet. Eine Notlauffunktion (eine sogenannte Limp home Funktionalität) ist somit nicht realisierbar.

Bei stromlos geschlossenen Druckregelventilen, z.B. EP 1219828 A2, für Common-Rail-Systeme ist der Wirksinn umgekehrt wie bei den stromlos offenen Druckregelventilen. Bei stromlos geschlossenen Druckregelventilen ist vorgesehen, dass das Druckregelventil über eine starke Feder im stromlosen Zustand bis zum Systemdruck (plus Toleranz) geschlossen ist. Die Druckregelung, d. h. das Öffnen des Druckregelventils, damit Kraftstoff aus dem Hochdruck-Kraftstoffspeicher absteuerbar ist, erfolgt über eine Magnetkraft, die der Schließkraft der Feder entgegenwirkt. Durch die Bestromung einer Magnetspule wird die Schließkraft des Druckregelventils reduziert bzw. der Federkraft entgegengewirkt, wodurch der Druck im Hochdruck-Kraftstoffspeicher bzw. der Raildruck auf das gewünschte Niveau geregelt werden kann. Im Fehlerfall, d. h. bei einem Steuergerätefehler oder einem Spannungsversorgungsfehler, kann somit weiterhin Raildruck aufgebaut und die Notlauffunktionalität gewährleistet werden.

Die Sicherheitsfunktion der Druckbegrenzung soll bei den stromlos geschlossenen Druckregelventilen durch die Federkraft realisiert werden. Dabei wird die Federkraft auf den maximal zulässigen Systemdruck im Hochdruck-Kraftstoffspeicher gegebenenfalls zuzüglich Toleranz eingestellt. In Versuchen und Simulationen zeigt sich jedoch, dass der sich einstellende Raildruck bzw. der Druck im Hochdruck-Kraftstoffspeicher im stromlosen Zustand stark vom Durchfluss abhängig ist. Der Systemdruck steigt bei Fehlern des Steuergeräts oder der Spannungsversorgung, abhängig vom Durchfluss, über den zulässigen maximalen Systemdruck an. Dies kann zu Komponentenschädigungen und zur Gefährdung von Mensch und Umgebung führen. Des weiteren steigen die Temperaturen im Kraftstoffrücklauf des Druckregelventils auf Werte über 200°C an.

### Vorteile der Erfindung

Dadurch, dass eine zweite Magneteinrichtung vorgesehen ist, deren Kraft die Federkraft unterstützt, kann eine schwächere Feder eingesetzt werden. Im Falle eines Spannungsverlustes oder eines Steuergerätefehlers kann somit die Schließkraft der Feder durch den ansteigenden Raildruck bzw. den ansteigenden Druck im Hochdruck-Kraftstoffspeicher überwunden werden, bevor ein maximal zulässiger Systemdruck im Hochdruck-Kraftstoffspeicher erreicht wird. Komponentenschäden und eine Gefährdung von Mensch und Umgebung wird somit vermieden. Zudem wird eine übermäßige Erhöhung der Temperaturen im Kraftstoffrücklauf des Druckregelventils vermieden.

Der Einsatz einer Feder ermöglicht es, dass bei einem Spannungsverlust am Druckregelventil weiterhin ein Raildruck aufgebaut werden kann und somit die Notlauffunktionalität gewährleistet ist.

Dadurch, dass anstelle einer Magneteinrichtung, die das Druckregelventil bzw. deren Ventilkolben schließt, zwei entgegengesetzt wirkende Magneteinrichtungen in Verbindung mit einer schwächeren Feder eingesetzt werden, lassen sich die Vorteile der beiden bisher bekannten Arten von Druckregelventilen miteinander kombinieren, ohne dass auch deren Nachteile in Kauf genommen werden müssen.

Der mechanische Öffnungsdruck (stromloser Zustand) kann vorzugsweise im mittleren Druckbereich des Systems liegen. Die Kraft der ersten Magneteinrichtung wirkt der Federkraft entgegen, so dass mit dem Druckregelventil Raildrücke im Bereich von 0 bar bis zum mechanischen Öffnungsdruck der Feder geregelt werden können.

Die Kraft der zweiten Magneteinrichtung unterstützt die Federkraft. Damit können vorzugsweise Raildrücke zwischen dem mechanischen Öffnungsdruck der Feder bis zum maximalen Systemdruck geregelt werden.

Durch eine intelligente Stromsteuerung mittels der Steuer- und Regeleinrichtung bzw. dem Steuergerät kann ein stetiger Druckanstieg/-abfall realisiert werden.

Auch in den Fehlerfällen "Steuergerätefehler" oder "Stromversorgungsfehler" bleibt der Raildruck innerhalb des Betriebsbereichs.

In einer vorteilhaften Ausgestaltung der Erfindung ist vorgesehen, dass die Magneteinrichtungen als Magnetspulen ausgebildet sind.

Die erfindungsgemäße Lösung ermöglicht die Druckregelung für Common-Rail-Systeme, insbesondere in Nutzfahrzeugen innerhalb des gesamten Regelbereichs in verschiedenen Regelmodi. Ebenso gewährleistet die erfindungsgemäße Lösung eine Limp home-Funktionalität der Nutzfahrzeuge, während der maximale Systemdruck nicht über den zulässigen Bereich steigt.

Nachfolgend ist anhand der Zeichnung ein Ausführungsbeispiel der Erfindung prinzipmäßig dargestellt.

### Kurzbeschreibung der Zeichnung

Es zeigen:
- Figur 1: eine Prinzipskizze eines Kraftstoffsystems einer Brennkraftmaschine; und
- Figur 2: eine Schnittdarstellung des erfindungsgemäßen Druckregelventils.

### Beschreibung von Ausführungsbeispielen

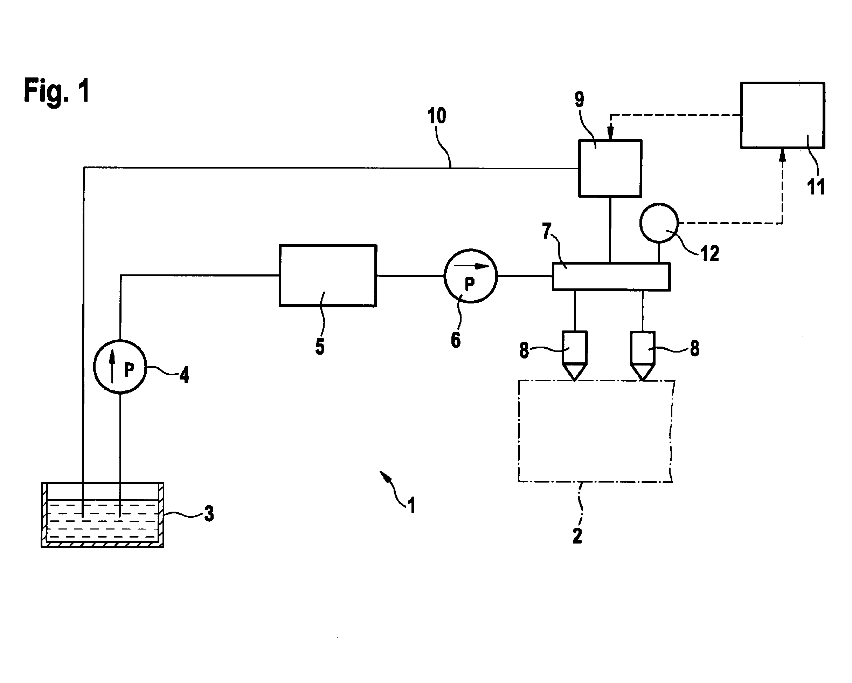

Figur 1 zeigt ein Kraftstoffsystem 1, welches zur Versorgung einer Brennkraftmaschine 2 dient. Die Brennkraftmaschine 2 ist in Figur 1 nur schematisch durch eine strichpunktierte Linie angedeutet.

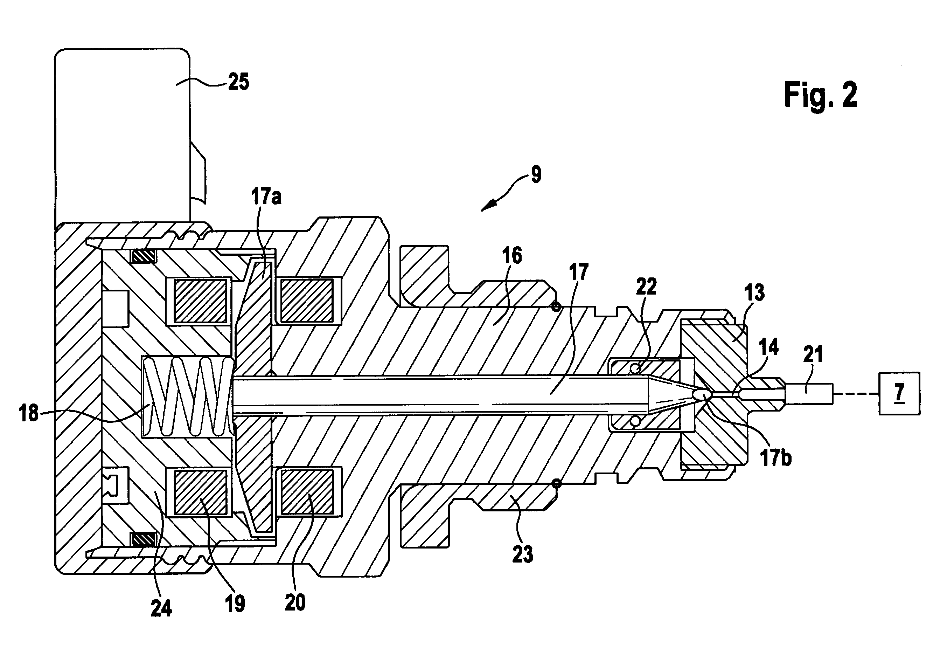

Das Kraftstoffsystem 1 umfasst einen Kraftstoffbehälter 3, aus dem eine üblicherweise elektrisch angetriebene Förderpumpe 4 den Kraftstoff zu einer Einstelleinrichtung 5, die auch als Zumesseinheit bezeichnet wird, fördert. Von der Einstelleinrichtung 5 wird der Kraftstoff zu einer mechanisch von der Brennkraftmaschine 2 angetriebenen Hochdruck-Kraftstoffpumpe 6 gefördert. Die Hochdruck-Kraftstoffpumpe 6 verdichtet den Kraftstoff auf einen sehr hohen Druck und fördert ihn in einen Hochdruck-Kraftstoffspeicher 7, der auch als "Rail" bezeichnet wird. An dem Hochdruck-Kraftstoffspeicher 7 sind mehrere Injektoren 8 angeschlossen, die den Kraftstoff in nicht dargestellte Brennräume der Brennkraftmaschine 2 einspritzen. An dem Hochdruck-Kraftstoffspeicher 7 ist ein erfindungsgemäßes Druckregelventil 9 angeschlossen, auf welches nachfolgend unter Bezug auf Figur 2 im Detail eingegangen wird. Von dem Druckregelventil 9 führt eine Absteuerleitung 10 zum Kraftstoffbehälter 3 zurück.

Der Betrieb des Kraftstoffsystems 1 wird von einer Steuer- und Regeleinrichtung 11 gesteuert bzw. geregelt. Diese wird allgemein auch als "Steuergerät" bezeichnet. Das Steuergerät 11 erhält Signale von einem Drucksensor 12, welcher den Druck im Hochdruck-Kraftstoffspeicher 7 erfasst. Abhängig von den Signalen des Drucksensors 12 steuert bzw. regelt das Steuergerät 11 unter anderem das Druckregelventil 9.

Das in Figur 2 dargestellte Druckregelventil 9 ist als Hochdruckregelventil zur Regelung des Drucks in dem Hochdruck-Kraftstoffspeicher 7 der Brennkraftmaschine 2 ausgebildet.

Das Druckregelventil 9 eignet sich insbesondere zum Einsatz in Common-Rail-Einspritzsystemen, insbesondere in Nutzfahrzeugen.

Das Druckregelventil 9 wird zur Regelung der Absteuerung von Kraftstoff aus dem Hochdruck-Kraftstoffspeicher 7 mit diesem verbunden (siehe auch Figur 1).

Da der grundsätzliche Aufbau eines Druckregelventils 9 aus dem Stand der Technik bekannt ist, wird nachfolgend nur auf die für die Erfindung wesentlichen Merkmale näher eingegangen.

Das Druckregelventil 9 weist einen Ventilsitz 13 mit einer Ventilbohrung 14 auf, über welche das Druckregelventil 9 zur Absteuerung von Kraftstoff mit dem Hochdruck-Kraftstoffspeicher 7 verbunden ist. Die Öffnung der Ventilbohrung 14 wird durch einen in einem Ventilgehäuse 16 beweglich gelagerten Ventilkolben 17 zur Regelung der abzusteuernden Menge von Kraftstoff beeinflusst (vergrößert oder verkleinert).

Der Ventilkolben 17 ist entgegen dem Druck im Hochdruck-Kraftstoffspeicher 7 durch eine Federkraft einer Feder 18 in Schließstellung beaufschlagt. Im Ausführungsbeispiel ist die Feder 18 als Druckfeder ausgebildet.

Ferner sind zwei durch das Steuergerät 11 steuerbare Magneteinrichtungen 19, 20 vorgesehen. Die erste Magneteinrichtung 19 erzeugt eine Kraft, die entgegen der Federkraft auf den Federkolben einwirkt. Die zweite Magneteinrichtung 20 erzeugt eine Kraft, die die Federkraft unterstützt, d. h. entsprechend auf den Ventilkolben 17 einwirkt.

Vorgesehen ist, dass die Federkraft der Feder 18 geringer ist als die beim Erreichen des zulässigen Systemdrucks im Hochdruck-Kraftstoffspeicher 7 auf den Ventilkolben 17 entgegengerichtet einwirkende Kraft.

Im Ausführungsbeispiel entspricht dabei die Federkraft der Feder 18 der Kraft, welche im mittleren Druckbereich im Hochdruck-Kraftstoffspeicher 7 auf den Ventilkolben 17 entgegengerichtet einwirkt.

Vorgesehen ist des weiteren, dass durch die erste Magneteinrichtung 19 eine Kraft erzeugbar ist, welche wenigstens der Federkraft entspricht. Vorgesehen ist des weiteren, dass durch die zweite Magneteinrichtung 20 eine Kraft erzeugbar ist, die gemeinsam mit der Federkraft der bei Erreichen des zulässigen Systemdrucks im Hochdruck-Kraftstoffspeicher 7 auf den Ventilkolben 17 entgegengerichtet einwirkenden Kraft entspricht.

Im Ausführungsbeispiel ist vorgesehen, dass zur Regelung des Drucks im Hochdruck-Kraftstoffspeicher bzw. zur Regelung der Absteuerung von Kraftstoff aus dem Hochdruck-Kraftstoffspeicher 7 beide Magneteinrichtungen 19, 20 durch das Steuergerät 11 steuer- bzw. regelbar sind.

Wie sich aus Figur 2 ergibt, ist der Ventilkolben 17 im Ausführungsbeispiel als Ankerbolzen 17 mit einer Ankerplatte 17a ausgebildet. Die Ankerplatte 17a ist (verschieblich) zwischen der ersten und der zweiten Magneteinrichtung 19 und 20 angeordnet.

Die Magneteinrichtungen 19, 20 sind im Ausführungsbeispiel als Magnetspulen 19, 20 ausgebildet.

Zum Verschließen der Ventilbohrung 14 ist die Spitze des Ankerbolzens 17 als Kugelspitze 17b ausgebildet.

In Figur 2 sind ferner in bekannter Weise ein Filter 21 (in Strömungsrichtung vor der Ventilbohrung 14), Rückflussöffnungen 22 (welche zu der Absteuerleitung 10 führen), eine Flanschschraube 23, ein Ventildeckel 24 und ein Konnektor 25 dargestellt, deren Funktionsweisen aus dem Stand der Technik hinlänglich bekannt sind.

Die erfindungsgemäße Lösung ist nicht auf das dargestellte Kraftstoffsystem und die dargestellte Ausführungsform des Druckregelventils beschränkt. Vielmehr kann das Druckregelventil auch konstruktiv einen anderen Aufbau aufweisen, bei dem sichergestellt ist, dass der durch eine Feder erzeugten Schließkraft des Druckregelventils die Kraft einer ersten Magneteinrichtung entgegenwirkt, während die Kraft einer zweiten Magneteinrichtung die Schließkraft der Feder unterstützt.

Ferner ist die erfindungsgemäße Lösung nicht auf den Einsatz bei Nutzfahrzeugen beschränkt, sondern kann auch bei Personenkraftwagen oder anderen Systemen, bei denen ein Druckregelventil, insbesondere ein Hochdruckregelventil, benötigt wird, eingesetzt werden (z.B. Generatormotoren, Personenkraftwagen, Marineanwendungen. Kraftwerkanwendungen etc.)

## Patentansprüche

1. Kraftstoffsystem einer Brennkraftmaschine, insbesondere eines Common-Rail-Einspritzsystems mit einem Hochdruck-Kraftstoffspeicher (7), von dem Kraftstoff zurück zu einem Kraftstoffbehälter durch ein Druckregelventil (9) absteuerbar ist, wobei das Druckregelventil (9) einen Ventilkolben (17) aufweist, welcher entgegen dem Druck im Hochdruck-Kraftstoffspeicher (7) durch eine Federkraft einer Feder (18) in Schließstellung beaufschlagt ist, **dadurch gekennzeichnet, dass** eine steuerbare erste Magneteinrichtung vorgesehen ist, deren Kraft entgegen der Federkraft auf den Ventilkolben (17) einwirkt und dass eine zweite Magneteinrichtung (20) vorgesehen ist, deren Kraft die Federkraft unterstützt.

2. Kraftstoffsystem nach Anspruch 1, **dadurch gekennzeichnet, dass** die Federkraft der Feder (18) geringer ist als die bei Erreichen des zulässigen Systemdrucks im Hochdruck-Kraftstoffspeicher (7) auf den Ventilkolben (17) entgegengerichtet einwirkende Kraft.

3. Kraftstoffsystem nach Anspruch 2, **dadurch gekennzeichnet, dass** die Federkraft der Feder (18) der Kraft entspricht, welche im mittleren Druckbereich im Hochdruck-Kraftstoffspeicher (7) auf den Ventilkolben (17) entgegengerichtet einwirkt.

4. Kraftstoffsystem nach einem der Ansprüche 1 bis 3, **dadurch gekennzeichnet, dass** durch die erste Magneteinrichtung (19) eine Kraft erzeugbar ist, welche wenigstens der Federkraft entspricht.

5. Kraftstoffsystem nach einem der Ansprüche 1 bis 4, **dadurch gekennzeichnet, dass** durch die zweite Magneteinrichtung (20) eine Kraft erzeugbar ist, die gemeinsam mit der Federkraft der bei Erreichen des zulässigen Systemdrucks im Hochdruck-Kraftstoffspeicher (7) auf den Ventilkolben (17) entgegengerichtet einwirkenden Kraft entspricht.

6. Kraftstoffsystem nach einem der Ansprüche 1 bis 5, **dadurch gekennzeichnet, dass** zur Regelung des Drucks in dem Hochdruck-Kraftstoffspeicher (7) beide Magneteinrichtungen (19,20) mittels einer Steuer- und Regeleinrichtung (11) steuerbar bzw. regelbar sind.

7. Kraftstoffsystem nach einem der Ansprüche 1 bis 6, **dadurch gekennzeichnet, dass** der Ventilkolben (17) als Ankerbolzen mit einer Ankerplatte (17a) ausgebildet ist, welche zwischen der ersten Magneteinrichtung (19) und der zweiten Magneteinrichtung (20) angeordnet ist.

8. Kraftstoffsystem nach einem der Ansprüche 1 bis 7, **dadurch gekennzeichnet, dass** die Magneteinrichtungen (19,20) als Magnetspulen ausgebildet sind.

9. Kraftstoffsystem nach einem der Ansprüche 1 bis 8, **dadurch gekennzeichnet, dass** die Feder (18) eine Druckfeder ist.

## Claims

1. Fuel system of an internal combustion engine, in particular of a common rail injection system having a high-pressure fuel accumulator (7) from which fuel can be discharged back to a fuel tank through a pressure-regulating valve (9), the pressure-regulating valve (9) having a valve piston (17) which is loaded into a closed position counter to the pressure in the high-pressure fuel accumulator (7) by a spring force of a spring (18), **characterized in that** a controllable first magnet device is provided, the force of which acts on the valve piston (17) counter to the spring force, and **in that** a second magnet device (20) is provided, the force of which assists the spring force.

2. Fuel system according to Claim 1, **characterized in that** the spring force of the spring (18) is lower than the force which acts on the valve piston (17) in the opposite direction when the admissible system pressure is reached in the high-pressure fuel accumulator (7).

3. Fuel system according to Claim 2, **characterized in that** the spring force of the spring (18) corresponds to the force which acts on the valve piston (17) in the opposite direction in the medium pressure range in the high-pressure fuel accumulator (7).

4. Fuel system according to one of Claims 1 to 3, **characterized in that**, by means of the first magnet device (19), a force can be generated which at least corresponds to the spring force.

5. Fuel system according to one of Claims 1 to 4, **characterized in that**, by means of the second magnet device (20), a force can be generated which, together with the spring force, corresponds to the force which acts on the valve piston (17) in the opposite direction when the admissible system pressure is reached in the high-pressure fuel accumulator (7).

6. Fuel system according to one of Claims 1 to 5, **characterized in that**, to regulate the pressure in the high-pressure fuel accumulator (7), the two magnet devices (19, 20) can be controlled and regulated by means of a control and regulating device (11).

7. Fuel system according to one of Claims 1 to 6, **characterized in that** the valve piston (17) is designed as an armature pin with an armature plate (17a) which is arranged between the first magnet device (19) and the second magnet device (20).

8. Fuel system according to one of Claims 1 to 7, **characterized in that** the magnet devices (19, 20) are designed as magnet coils.

9. Fuel system according to one of Claims 1 to 8, **characterized in that** the spring (18) is a compression spring.

## Revendications

1. Système de carburant d'un moteur à combustion interne, notamment d'un système d'injection à rampe commune, comprenant un accumulateur de carburant haute pression (7), depuis lequel du carburant peut être ramené à un réservoir de carburant par une soupape de régulation de pression (9), la soupape de régulation de pression (9) présentant un piston de soupape (17) qui est sollicité dans la position de fermeture à l'encontre de la pression dans l'accumulateur de carburant haute pression (7) par une force de ressort d'un ressort (18), **caractérisé en ce qu'**un premier dispositif magnétique commandable est prévu, dont la force agit à l'encontre de la force de ressort sur le piston de soupape (17) et **en ce qu'**un deuxième dispositif magnétique (20) est prévu, dont la force assiste la force de ressort.

2. Système de carburant selon la revendication 1, **caractérisé en ce que** la force de ressort du ressort (18) est inférieure à la force agissant en sens inverse sur le piston de soupape (17) lorsque la pression de système admissible est atteinte dans l'accumulateur de carburant haute pression (7).

3. Système de carburant selon la revendication 2, **caractérisé en ce que** la force de ressort du ressort (18) correspond à la force qui agit en sens inverse sur le piston de soupape (17) dans la plage de pression moyenne dans l'accumulateur de carburant haute pression (7).

4. Système de carburant selon l'une quelconque des revendications 1 à 3, **caractérisé en ce qu'**une force peut être produite par le premier dispositif magnétique (19), laquelle correspond au moins à la force de ressort.

5. Système de carburant selon l'une quelconque des revendications 1 à 4, **caractérisé en ce qu'**une force peut être produite par le deuxième dispositif magnétique (20), laquelle correspond, conjointement avec la force de ressort, à la force agissant en sens inverse sur le piston de soupape (17) lorsque la pression de système admissible est atteinte dans l'accumulateur de carburant haute pression (7).

6. Système de carburant selon l'une quelconque des revendications 1 à 5, **caractérisé en ce que**, pour la régulation de la pression dans l'accumulateur de carburant haute pression (7), les deux dispositifs magnétiques (19, 20) peuvent être commandés ou régulés au moyen d'un dispositif de commande et de régulation (11).

7. Système de carburant selon l'une quelconque des revendications 1 à 6, **caractérisé en ce que** le piston de soupape (17) est réalisé sous forme de boulon d'ancrage avec une plaque d'ancrage (17a), qui est disposée entre le premier dispositif magnétique (19) et le deuxième dispositif magnétique (20).

8. Système de carburant selon l'une quelconque des revendications 1 à 7, **caractérisé en ce que** les dispositifs magnétiques (19, 20) sont réalisés sous forme de bobines magnétiques.

9. Système de carburant selon l'une quelconque des revendications 1 à 8, **caractérisé en ce que** le ressort (18) est un ressort de pression.
